# FASCICULE DE BREVET EUROPEEN

(11) **EP 0 966 413 B1**
(45) Date de publication et mention de la délivrance du brevet: **11.06.2003**
(21) Numéro de dépôt: 98914916.6
(22) Date de dépôt: 13.03.1998
(51) Int. Cl.: C04B 41/87, C04B 35/83

(54) **PROCEDE DE DENSIFICATION D'UNE STRUCTURE POREUSE AVEC CIRCULATION DU PRECURSEUR ET DISPOSITIF ASSOCIE**
VERFAHREN UND VORRICHTUNG ZUR VERDICHTUNG EINER PORÖSEN STRUKTUR MIT EINEM STRÖMENDEN VORPRODUKT
METHOD FOR DENSIFYING A POROUS STRUCTURE BY CIRCULATION OF THE PRECURSOR AND ASSOCIATED DEVICE

(30) Priorité: 13.03.1997 FR 9702987
(43) Date de publication de la demande: 29.12.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: DAVID, Patrick, F-75014 Paris (FR); BENAZET, Jean-Daniel, F-37260 Artannes (FR)
(74) Mandataire: Le Roux, Martine
(86) Numéro de dépôt international: FR9800516
(87) Numéro de publication internationale: WO98040328

(56) Documents cités:
- EP-A- 0 081 409
- WO-A-90/15776
- JP-A- 56 017 915
- US-A- 5 547 717
- PATENT ABSTRACTS OF JAPAN vol. 005, no. 067 (C-053), 7 mai 1981 -& JP 56 017915 A (INOUE JAPAX RES INC), 20 février 1981, -& DATABASE WPI Section Ch, Week 8115, Derwent Publications Ltd., London, GB; Class E36, AN 81-26454D, XP002071128 & JP 56 017 915 A (INOUE JAPAX RES INC) 20 Février 1981

## Description

La présente invention a pour objets un procédé de densification d'une structure poreuse avec circulation du précurseur et un dispositif utile à la mise en oeuvre dudit procédé.

La présente invention constitue un perfectionnement à la technique de base dite de "densification par caléfaction ou densification rapide" selon laquelle les structures poreuses à densifier sont maintenues immergées dans un hydrocarbure liquide et l'ensemble structure poreuse/hydrocarbure liquide est chauffé (le chauffage mis en oeuvre est généralement un chauffage inductif et/ou résistif). Ladite technique de base, décrite notamment dans la demande FR-A-2 516 914 (déposée le 26 novembre 1981), permet d'obtenir des densifications, par du carbone, en un temps beaucoup plus court qu'avec les procédés classiques, tels
- l'infiltration chimique en phase vapeur (dite CVI) (procédé selon lequel on place la structure à densifier dans un courant gazeux et on porte l'ensemble à une température élevée de sorte que le carbone obtenu par décomposition dudit gaz (précurseur) se dépose en partie dans les vides de la structure. Les gaz les plus souvent employés sont le méthane, le propane, le benzène et des hydrocarbures à bas poids moléculaire. Les procédés industriels emploient principalement le méthane) ;
   ou
- l'imprégnation par des brais (procédé selon lequel on plonge la structure à densifier dans un bain liquide de brai et on pyrolyse ensuite en statique ledit brai).

Ladite technique de base a par ailleurs élargi son champ d'application, dans la mesure où elle a été adaptée pour mettre en oeuvre des densifications par des composés céramiques (voir notamment FR-A-2 712 884). Elle s'est, dans ce contexte, aussi, révélée beaucoup plus performante que l'imprégnation par des polymères précurseurs de céramiques.

La mise en oeuvre de ladite technique de base - performante - ne se révèle toutefois pas optimisée à ce jour. Il existe notamment de réels problèmes quant à l'homogénéité des dépôts, de carbone ou de céramique, entre le haut et le bas d'une pièce traitée; problèmes d'autant plus aigus que la hauteur de ladite pièce est importante. En effet, lors de la mise en oeuvre de ladite technique de base, le précurseur liquide est vaporisé à l'intérieur de la structure poreuse (pièce) à densifier. Une partie de la vapeur (environ 10 %, dans le cas du cyclohexane à 1 100°C) est craquée au contact de la partie la plus chaude. La convection naturelle, engendrée par les gradients thermiques et de pression, conduit à l'expulsion, hors de la structure poreuse, de la vapeur surchauffée et des gaz de décomposition (de l'hydrogène et des hydrocarbures légers principalement). Ces gaz et cette vapeur produits sous forme de bulles sur l'ensemble de la surface de la pièce immergée remontent le long de celle-ci, au travers du précurseur liquide, vers le haut du réacteur. La quantité de gaz et de vapeur mélangée au liquide précurseur croit donc du bas de la pièce au haut de celle-ci. La présence de ce gaz et/ou de cette vapeur est néfaste au bon déroulement du procédé de densification. Un obstacle est ainsi créé à la pénétration du précurseur dans la partie haute de la pièce (structure poreuse) traitée. Dans cette partie haute, on observe donc une concentration en précurseur plus faible et de plus, une température plus élevée et un gradient thermique plus faible dans la zone de densification (la température et les gradients thermiques dépendant, en effet, fortement de l'évacuation des calories provenant de l'évaporation et du chauffage de la vapeur).

Les conditions de dépôt deviennent donc généralement, à partir d'une certaine température, hétérogènes, avec une augmentation de l'écart de vitesse de densification entre le haut et le bas de la pièce traitée.

En effet, plus la pièce possède une hauteur importante, plus la quantité de gaz et vapeur est élevée en partie haute. Dès une hauteur d'une vingtaine de centimètres, ces perturbations deviennent importantes à partir de 1 150 - 1 200 °C. Pour une hauteur de 50 cm, dans les mêmes conditions (même réacteur, même type de pièce), on obtient des perturbations similaires dès 1 050°C. Dans des conditions extrêmes, apparaissant pour une température limite, qui est fonction de la pièce et de la configuration du réacteur, il se forme un bouchon de gaz qui enveloppe la pièce et le précurseur ne peut plus pénétrer dans la structure de manière satisfaisante.

En référence à ce problème d'hétérogénéité du dépôt et/ou en vue d'augmenter la vitesse dudit dépôt, on a déjà proposé, selon l'art antérieur, des adaptations et/ou modifications à ladite technique de base de caléfaction, ainsi qu'aux procédés classiques, notamment à la CVI. Lesdites adaptations et/ou modifications, présentées brièvement ci-après n'ont en rien suggéré le perfectionnement à ladite technique de base, principal objet de l'invention présentement revendiquée, décrit en détail plus avant dans le présent texte.

Pour améliorer la technique d'infiltration chimique en phase vapeur (CVI), on a proposé :
- la création de gradients thermiques ("thermal gradient CVI") ;
- l'établissement d'une différence de pression ("forced flow CVI" or "pressure gradient CVI") ;
- la génération de pulsations en pression et/ou débit, pour l'envoi du gaz précurseur ("pulsed CVI").

Des améliorations à la technique de base (caléfaction), principalement mise en oeuvre pour des densifications par du carbone, ont été proposées dans les brevets US-A-5,389,152 et US-A-5,547,717. Plus précisément, dans ledit brevet US-A-5,389,152, afin de remédier aux problèmes d'hétérogénéité, il a été proposé les adaptations suivantes :
- des inducteurs conçus de manière à générer des puissances de chauffage inductif différentes suivant les parties de la pièce traitée (afin de compenser les variations d'échanges thermiques suivant la hauteur);
- l'emploi, en complément du chauffage inductif, d'un chauffage résistif;
- le chauffage, de manière pulsée, de la pièce traitée (afin de permettre aux gaz de s'échapper et donc au précurseur liquide de diffuser plus facilement).

Ces adaptations, proposées dans le même but que le principal objet de la présente invention, ne fonctionnent pas sur le même principe que celui-ci, comme cela va apparaître clairement à l'homme du métier à la considération de ce qui suit . Elles ne sont par ailleurs pas d'une mise en oeuvre très simple; elles demandent notamment une mise au point différente pour chaque nouveau type d'échantillon.

Le document JP-A-56017915 propose d'effectuer une circulation du précurseur liquide, en sens ascendant, au moyen d'une pompe.

Dans le cadre de la présente invention, la Demanderesse propose une modification technologique (un perfectionnement) originale audit procédé de base de densification par caléfaction d'une structure poreuse. Ladite modification peut intervenir aussi bien dans le cadre d'une densification par du carbone que dans le cadre d'une densification par un composé céramique; le précurseur intervenant étant choisi en conséquence.

Le procédé de densification d'une structure poreuse, premier objet de la présente invention, comprend donc, de façon classique, le maintien de ladite structure poreuse immergée dans un précurseur liquide et le chauffage de l'ensemble structure poreuse/précurseur liquide de sorte que le produit de décomposition - solide - dudit précurseur liquide se dépose en partie dans les pores de ladite structure poreuse. De façon caractéristique, il est mis en oeuvre avec ledit précurseur liquide qui circule verticalement, à un débit élevé, selon un mouvement ascendant par convection naturelle.

Cette circulation, à débit élevé, du précurseur liquide, dans le réacteur (renfermant ledit précurseur liquide et la structure poreuse traitée, immergée en son sein) est particulièrement avantageuse, en référence aux problèmes techniques présentés en amont. Elle augmente en effet de manière importante l'évacuation des gaz de craquage et de la vapeur générés au sein de la structure, ce qui conduit à une meilleure diffusion du précurseur au sein de ladite structure et permet donc de corriger le caractère hétérogène de la densification qui se manifeste, classiquement, sur des pièces d'une hauteur supérieure à une vingtaine de centimètres. Il en résulte un gain important tant pour l'homogénéité des dépôts, que pour les vitesses de densification et les rendements.

On a, dans le cadre de la présente invention, obtenu des densifications homogènes, même pour des pièces de hauteur importantes, jusqu'à des températures supérieures à 1 200°C. Les vitesses de densification et les rendements en carbone augmentant de manière importante avec la température, cette modification est très importante du point de vue économique du procédé. A titre de comparaison, avec le cyclohexane comme précurseur, lorsque l'on peut travailler à 1 200°C au lieu de 1 000°C, l'on gagne un facteur 3 sur le rendement et un facteur 10 sur la vitesse de densification.

La circulation (selon un axe vertical à l'intérieur du réacteur) originale du précurseur liquide se fait, pour des raisons évidentes à l'homme du métier, avantageusement en circuit bouclé; ledit circuit comportant évidemment les moyens adéquats pour l'évacuation des gaz de réaction ainsi qu'avantageusement des moyens de récupération, à l'état liquide, dudit précurseur liquide vaporisé et/ou entraîné - sous forme d'aérosol - par lesdits gaz de réaction.

Le précurseur liquide circule par convection naturelle (principe du thermosiphon). Ce mode de circulation du précurseur liquide est d'une mise en oeuvre aisée et peut permettre d'obtenir des débits élevés. Le dimensionnement des conduits de l'installation à prévoir pour une telle mise en oeuvre est obtenu par un calcul classique d'hydrodynamique, familier à l'homme du métier.

On a indiqué que la circulation originale dudit précurseur liquide se fait, dans le cadre du procédé de l'invention, à un débit élevé. En effet, une telle circulation n'a rien à voir avec la pseudo-circulation qui se met en place, en fonctionnement classique, lorsque le précurseur vaporisé et/ou entraîné par les gaz de réaction est recyclé dans le réacteur. De façon nullement limitative, on peut préciser ici que ladite circulation est généralement mise en oeuvre dans le procédé de l'invention à un débit compris entre 1 l/min et 300 l/min pour environ 1 000 cm² de surface de structure poreuse à densifier.

Dans le cadre du procédé de caléfaction amélioré selon la présente invention par la circulation du précurseur liquide, la Demanderesse propose d'autres innovations.

Le chauffage mis en oeuvre pour assurer la décomposition du précurseur utilisé dans le procédé de l'invention peut faire intervenir tout type de moyens. Il s'agit généralement d'un chauffage inductif ou d'un chauffage résistif, voire d'un chauffage inductif et/ou résistif. La combinaison de ces deux types de chauffage (i.e. l'intervention conjointe de moyens distincts, adéquats, pour assurer d'une part un chauffage par induction et d'autre part un chauffage par effet Joule) fait partie intégrante du cadre de la présente invention. Toutefois, la Demanderesse préconise plutôt de mettre en oeuvre le procédé de l'invention soit avec un chauffage inductif, soit avec un chauffage résistif. Le chauffage inductif est particulièrement préconisé.

La mise en oeuvre d'un tel chauffage inductif fait avantageusement intervenir un suscepteur. L'homme du métier n'ignore pas a priori l'intérêt d'un tel suscepteur (bien évidemment en un matériau adéquat pour qu'il puisse être chauffé par induction). La structure poreuse à densifier est maintenue au contact dudit suscepteur. Un tel contact structure poreuse à densifier/suscepteur peut se décliner selon plusieurs variantes. La surface de contact peut notamment être plane ou courbe. On peut ainsi "associer" une structure poreuse plane et un suscepteur plan, deux structures poreuses planes de part et d'autre d'un suscepteur plan, une structure poreuse en forme de manchon et un suscepteur cylindrique ....

On rappelle incidemment ici que le procédé de l'invention peut tout à fait inclure un chauffage inductif, sans faire intervenir de suscepteur, dans conditions électromagnétiques de couplage différentes. Ceci se conçoit aisément pour l'homme du métier.

Pour la mise en oeuvre d'un chauffage résistif, la structure poreuse à densifier peut constituer elle-même le résistor. Toutefois, il est généralement avantageux (au vu notamment de la nature de la pièce à densifier, de son épaisseur ...) de faire intervenir un résistor, séparé, isolé électriquement de ladite structure poreuse à densifier. Ainsi trouve-t-on généralement entre un tel résistor et ladite structure poreuse, un isolant électrique, aussi bon conducteur thermique que possible, par exemple en nitrure de bore. On parle alors d'un quasi contact entre ladite structure et ledit résistor. Ledit quasi contact structure poreuse à densifier/résistor peut lui aussi se décliner selon plusieurs variantes ; la surface de quasi contact pouvant elle aussi être notamment plane ou courbe. On peut aussi trouver au quasi contact d'un résistor plan une (deux) structure(s) poreuse(s) plane(s), au quasi contact d'un résistor cylindrique une structure poreuse en forme de manchon.

Ledit contact ou quasi contact, suscepteur/structure poreuse à densifier, résistor/structure poreuse à densifier, pouvant poser des problèmes (d'autant plus aigus qu'il est plus intime ; par exemple, dans le cas où la structure poreuse, de forme tubulaire, entoure ledit suscepteur ou ledit résistor) :
- lors du refroidissement, en fin de procédé (apparition de fissures dans la structure poreuse densifiée en raison des différences entre le coefficient de dilatation de ladite structure et celui dudit suscepteur ou celui dudit résistor) ;
   et
- lors de la récupération de la structure poreuse densifiée (lors de sa désolidarisation dudit suscepteur ou dudit résistor), à l'issue dudit procédé ; la Demanderesse a trouvé particulièrement opportun de faire intervenir entre ladite structure poreuse et ledit suscepteur ou ledit résistor un joint de dilatation. Un tel joint, pour développer son action bénéfique présente généralement une épaisseur d'au moins 1 mm. Il présente avantageusement une épaisseur d'au moins 3 mm. Un tel joint peut avantageusement consister en du papier graphite. L'intervention d'un tel joint ne se révèle bien sûr opportune que dans les contextes où intervient un suscepteur et/ou un résistor. Elle est a fortiori opportune, comme mentionné plus haut, lorsque la structure poreuse traitée entoure ledit suscepteur et/ou ledit résistor. Même lorsqu'un tel joint de dilatation intervient, on parle pour des raisons de simplification, de contact ou quasi contact, respectivement entre la structure poreuse et le suscepteur et entre la structure poreuse et le résistor.

Pour obtenir par ailleurs la densification de la structure poreuse sur toute son épaisseur, qu'un suscepteur ou résistor intervienne ou pas, la Demanderesse propose une innovation. Elle préconise l'intervention d'une autre structure poreuse au contact de la(des) surface(s) libre(s) de ladite structure poreuse à densifier. L'épaisseur de ladite autre structure poreuse est d'au moins 3 mm pour l'obtention de l'effet escompté ; elle est généralement comprise entre 3 et 5 mm. Ladite autre structure poreuse peut consister en un feutre. Ladite autre structure poreuse qui se trouve partiellement densifiée à l'issue du procédé de densification de la structure poreuse, sur toute son épaisseur, intervient au contact de la (des) surface(s) de ladite structure poreuse qui, sans elle, serai(en)t directement au contact de l'hydrocarbure liquide dans lequel ladite structure poreuse à densifier est immergée.

De plus, la Demanderesse a constaté que la température de la réaction de densification est avantageusement pilotée en fonction du débit et de la composition des gaz de la réaction; i.e. qu'elle préconise la régulation de la puissance du générateur par le débit et la composition desdits gaz. Elle a, dans ces conditions, obtenu des résultats meilleurs par rapport à ceux obtenus avec un pilotage classique, en fonction de la température maximale de la structure poreuse traitée.

Enfin, la Demanderesse tient à souligner que la mise en oeuvre de la présente invention, pour une densification par du carbone, se révèle particulièrement intéressante avec le précurseur de référence de la technique de base, modifiée ou non, à savoir le cyclohexane. Toutefois, elle n'est nullement limitée à l'utilisation dudit cyclohexane à titre de précurseur. D'autres précurseurs ont été cités dans les brevets US-A-5,389,152 et US-A-5,547,717; d'autres précurseurs ont été testés par la Demanderesse. Certains se révèlent, de façon tout à fait surprenante, particulièrement performants, mis en oeuvre selon ladite technique de base ou ladite technique de base, telle qu'améliorée selon la présente invention. Il s'agit de composés aromatiques répondant à l'une ou l'autre des formules (I) et (II) ci-après : 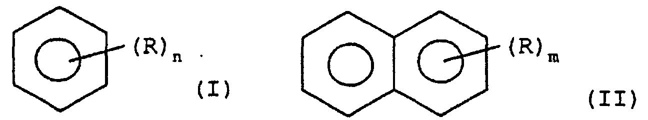 dans lesquelles :
n = 1,2, 3 ou 4,
m = 0, 1 ,2 , 3 ou 4,
R représente, indépendamment, un halogène, de préférence le chlore, ou un groupement alkyle choisi parmi les groupes méthyle, éthyle, n-propyle ou i-propyle.

Il peut s'agir d'un mélange de tels composés. Il s'agit avantageusement du toluène ou du chlorobenzène.

On rappelle incidemment ici que le procédé de l'invention convient également pour une densification par des composés céramiques. Les précurseurs adéquats, des types borazines, alcoolates, silanes sont, de la même façon originale, mis en circulation.

Le procédé de l'invention est évidemment mis en oeuvre à une température adaptée à la nature du précurseur intervenant. Ledit précurseur doit se décomposer thermiquement pour générer l'agent de densification attendu. Ledit procédé de l'invention est généralement mis en oeuvre à une température d'au moins 800°C; avantageusement à une température supérieure à 1 000°C. Ladite température du procédé est celle de la zone de dépôt (de densification). Elle est proche de la température du suscepteur ou du résistor, dans l'hypothèse où un tel suscepteur ou le résistor intervient

Pour ce qui concerne la pression sous laquelle ledit procédé est mis en oeuvre, elle est généralement comprise entre 0,8.10⁵ et 2.10⁵ Pa (entre 0,8 et 2 bars), avantageusement supérieure à 10⁵ Pa (1 bar). On préconise de mettre en oeuvre ledit procédé à une pression supérieure à la pression atmosphérique avec des précurseurs de carbone dans la mesure où, dans de telles conditions, le carbone introduit dans la structure poreuse, se révèle parfaitement graphitisable.

Les structures poreuses densifiées selon l'invention sont généralement, à l'issue du traitement de densification, traitées thermiquement, de préférence sous vide, pour éliminer de leur structure, toute trace du précurseur qui est intervenu. Elles peuvent ensuite être destinées à divers types d'applications. S'il est prévu de les traiter thermiquement à des fins de graphitisation, on veillera bien évidemment à mettre en oeuvre le procédé de l'invention dans des conditions telles (notamment de pression) que le carbone de densification déposé soit graphitisable.

Pour ce qui concerne le champ d'application du procédé de l'invention (ci-dessus décrit en termes généraux et ci-après détaillé en référence à la figure annexée et illustré par un exemple), on peut préciser ce qui suit et indiquer d'ores et déjà qu'il est très vaste. Le procédé de densification revendiqué peut notamment s'appliquer à la densification de feutres, tissus et plus généralement de structures bi- ou tri-dimensionnelles, à base de fibres de carbone ou de fibres céramiques, pouvant être avantageusement utilisés, du fait de leur résistance mécanique élevée et de leur bonne résistance aux chocs et à l'abrasion, pour la réalisation de disques de frein, notamment d'avions. Le procédé de l'invention peut de la même façon être mis en oeuvre pour la rénovation de tels disques de frein. Plus généralement, le procédé de l'invention convient pour la densification, par du carbone ou des composés céramiques, de toute structure poreuse, à base de fibres ou autres ... Il peut notamment convenir pour la densification de mousses à porosité ouverte, d'empilements de sphères (en carbone ou en céramiques, par exemple ...) Il peut également constituer un traitement complémentaire pour la densification de pièces présentant une très faible porosité, par exemple de l'ordre de 5 % ...

On en vient maintenant au deuxième objet de la présente invention, à savoir un dispositif utile à la mise en oeuvre de son premier objet, i.e. un dispositif utile à la densification par caléfaction d'une structure poreuse, caléfaction mise en oeuvre avec circulation du précurseur liquide. Un tel dispositif comprend :
- un réacteur au sein duquel la structure poreuse est immergée dans un précurseur liquide;
- des moyens pour assurer le chauffage (notamment par induction et/ou effet Joule) de l'ensemble structure poreuse/précurseur liquide ;
- des moyens de récupération, à l'état liquide, du précurseur vaporisé et/ou entraîné - sous forme d'aérosol - par les gaz de réaction ;
- des moyens pour assurer la circulation verticale, à un débit élevé, selon un mouvement ascendant, dudit précurseur liquide dans ledit réacteur.

Lesdits derniers moyens assurent avantageusement ladite circulation dudit précurseur liquide selon un circuit bouclé. Comme indiqué plus haut, lesdits derniers moyens consistent en des moyens formant thermosiphon (circulation par convection naturelle).

Dans l'hypothèse où le précurseur intervenant est à l'état solide à la température ambiante, il convient d'aménager le dispositif de l'invention (qu'il englobe des moyens de chauffage inductif et/ou résistif), tant au niveau de l'alimentation du réacteur en ledit précurseur qu'au niveau des moyens de récupération à l'état liquide dudit précurseur vaporisé et/ou entraîné par les gaz de réaction. Au niveau de l'alimentation, on prévoit avantageusement des moyens de chauffage adéquats. Au niveau de la récupération, on doit également prévoir des moyens de chauffage adéquats en sus de moyens de refroidissement classiquement prévus lorsque ledit précurseur est liquide à la température ambiante. En effet, un tel précurseur - liquide à la température ambiante - lorsqu'il est vaporisé et/ou entraîné par les gaz de réaction va se recondenser au contact desdits moyens de refroidissement et être ainsi aisément recyclé dans le réacteur (généralement par simple gravité). Par contre, un précurseur - solide à la température ambiante - se cristalliserait au niveau de tels moyens de refroidissement, encrasserait lesdits moyens et ne pourrait être recyclé aisément dans le réacteur. Avec un tel précurseur lourd, on doit donc prévoir une combinaison de moyens de refroidissement et de moyens de chauffage pour recycler ledit précurseur lourd vaporisé et/ou entraîné par les gaz de réaction. Au niveau desdits moyens de refroidissement, ledit précurseur lourd vaporisé et/ou entraîné doit être condensé sans cristallisation et au niveau desdits moyens de chauffage ledit précurseur condensé (liquide) doit être maintenu en phase liquide.

On notera incidemment ici que lesdits gaz de réaction consistent principalement en de l'hydrogène et des hydrocarbures légers du type méthane, éthylène, éthane ... lorsqu'un précurseur de carbone intervient.

Pour ce qui concerne les moyens destinés à assurer le chauffage de l'ensemble structure poreuse/précurseur liquide, il peut notamment s'agir de moyens convenant pour un chauffage inductif et/ou résistif.

Les moyens convenant pour un chauffage inductif comprennent une bobine d'induction. Ladite bobine d'induction peut être agencée à l'extérieur du réacteur. Elle est avantageusement disposée dans le réacteur, immergée dans le précurseur liquide, autour de la structure poreuse. A ladite bobine d'induction est avantageusement associé un suscepteur.

Les moyens convenant pour un chauffage résistif comprennent avantageusement un résistor auquel on associe, comme précisé plus haut, un isolant électrique, aussi bon conducteur thermique que possible.

Ainsi, selon des variantes préférées, le réacteur du dispositif de l'invention renferme un suscepteur et/ou un résistor, généralement un suscepteur ou un résistor. Ledit suscepteur et/ou résistor est prévu au (quasi) contact de la structure poreuse à densifier. On trouve généralement ledit suscepteur et/ou ledit résistor sur un support ménagé au sein du réacteur, ledit support pouvant avantageusement être rotatif. Ledit support convient également- généralement pour supporter la structure poreuse à densifier et avantageusement l'autre structure poreuse qui peut intervenir au contact de la (des) surface(s) libre(s) de ladite structure poreuse à densifier. Au (quasi) contact de ladite structure poreuse et dudit suscepteur et/ou résistor est avantageusement prévu, comme indiqué plus haut, un joint de dilatation.

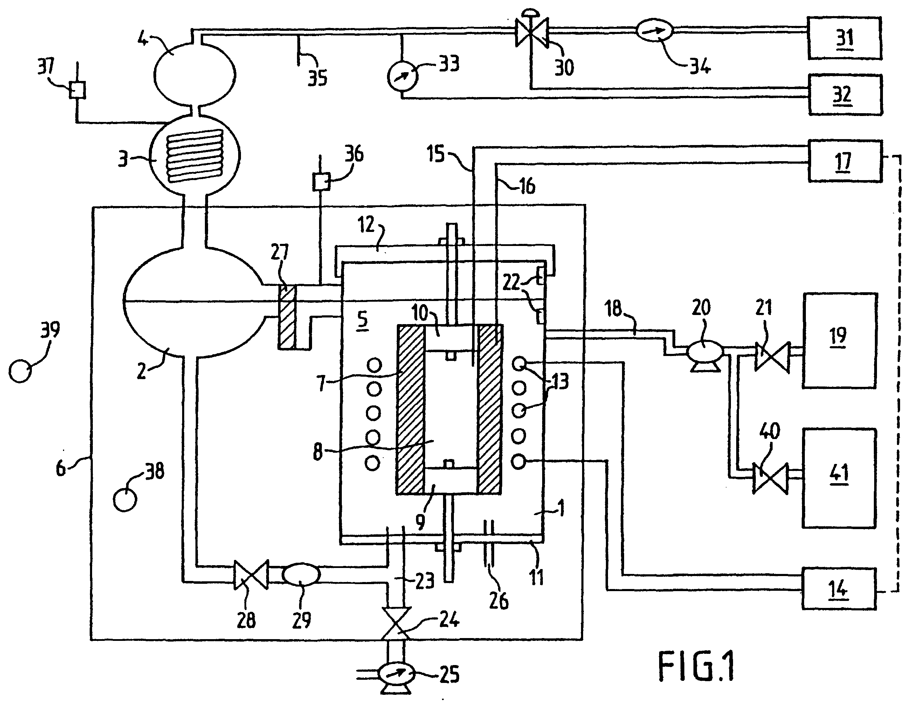

On se propose de décrire plus précisément les procédé et dispositif de l'invention en référence à l'unique figure annexée : la figure 1, sur laquelle on a schématisé une variante de dispositif de l'invention, susceptible d'être utilisée pour la mise en oeuvre du procédé de l'invention (avec chauffage inductif et un précurseur liquide à la température ambiante).

**A** - Ledit dispositif comprend quatre parties, à savoir un réacteur 1, un thermosiphon 2 en parallèle avec ledit réacteur 1, un condenseur 3 ou échangeur de chaleur et un dévésiculeur 4 ou piège à aérosols. Le réacteur 1 et le thermosiphon 2, contenant le précurseur liquide 5 (cyclohexane par exemple), sont dimensionnés afin de fonctionner sur le principe du thermosiphon. Ils sont entourés d'une enceinte de confinement ou boîte à gants 6 balayée intérieurement par un courant de gaz neutre. Celle-ci assure la sécurité du manipulateur en cas de rupture du réacteur et permet d'éviter l'inflammation ou l'explosion des gaz de réaction ainsi que l'inhalation du produit par le manipulateur.

La structure poreuse à densifier 7 est avantageusement placée au contact d'un suscepteur 8 (par exemple un mandrin en graphite de façon à pouvoir être chauffé par induction). Cet ensemble 7+8 est positionné et maintenu dans le réacteur 1 par deux pièces de support et centrage 9 et 10, en alumine par exemple, coulissant au travers de la base 11 et du couvercle 12 de fermeture du réacteur 1.

Le suscepteur 8 et la structure poreuse 7 sont chauffés au moyen d'un dispositif de chauffage par induction constitué de bobines 13 pouvant se situer à l'intérieur ou à l'extérieur du réacteur 1 (dans le dispositif représenté sur la figure 1, lesdites bobines 13 sont agencées à l'intérieur dudit réacteur 1) et dans lesquelles circule un courant haute fréquence fourni par un générateur 14. Les températures de la structure poreuse 7 et du suscepteur 8 sont mesurées par des thermocouples ou thermosondes 15 et 16 reliés à un programmateur 17 permettant de réguler la puissance du générateur 14 afin de contrôler la température de dépôt (de densification).

Un conduit 18 permet l'introduction de précurseur à l'intérieur du réacteur 1, à partir de la réserve 19, grâce à la pompe 20 et à la vanne 21. Le niveau du réacteur est maintenu constant à l'aide de deux capteurs de niveau 22 qui commandent le déclenchement et l'arrêt de la pompe 20. Un conduit 23, muni d'une vanne 24 et d'une pompe 25, permet de récupérer, en fin de densification, les composés usagés. Le réacteur 1 est aussi muni d'un conduit d'amenée 26 d'azote ou autre gaz neutre servant à chasser l'air contenu dans le réacteur 1 en début de procédé.

Le thermosiphon 2 est parallèle au réacteur 1 et est relié à celui-ci, en partie haute par une tubulure latérale d'entrée mélange gaz-liquide munie d'un filtre 27, et en partie basse par la canalisation 23. Celle-ci est munie d'une vanne 28 et d'un débitmètre 29 afin de pouvoir réguler, dans une certaine mesure, le débit de précurseur.

Le condenseur 3 (type tube à calandres) est situé au-dessus du thermosiphon 2 et permet, par refroidissement des vapeurs du précurseur et par condensation de celles-ci, de les renvoyer dans le réacteur 1 par l'intermédiaire du thermosiphon 2. Ce condenseur 3 peut comprendre plusieurs compartiments refroidis à des températures différentes.

Le dévésiculeur 4, situé au-dessus du condenseur 3, a pour rôle d'éliminer le brouillard créé au niveau du réacteur 1.

Les gaz de réaction sont évacués, par l'intermédiaire d'une vanne de régulation de pression 30, et menés au travers d'un conduit jusqu'à une installation de traitement des gaz 31. La vanne de régulation de pression 30 est pilotée par un régulateur 32 relié à un pressostat 33. Le débit des gaz de craquage est mesuré par un débitmètre 34. La ligne 35 permet d'effectuer des analyses de gaz.

L'installation comporte aussi des soupapes de sécurité 36 et 37 afin d'éviter une surpression dans le réacteur ou dans la colonne (tarage à 2 bar). Des explosimètres 38 et 39 sont situés dans l'enceinte 6 et dans la pièce où se trouve l'installation, afin de détecter toute fuite de gaz.

L'emploi de la pompe 20 et de la vanne 40 permet d'envoyer du solvant, en provenance de la cuve 41, afin de rincer le réacteur 1 après densification.

**B** - Ledit dispositif est utilisé comme indiqué ci-après.

On positionne la pièce constituée de la structure poreuse 7, du suscepteur 8 et des pièces de centrage 9 et 10 à l'intérieur du réacteur 1. Le suscepteur 8 peut avantageusement être recouvert d'une fine épaisseur de papier graphite (quelques millimètres) afin de pouvoir séparer plus facilement, en fin de manipulation, ledit suscepteur 8 de la structure 7 densifiée. Ledit papier graphite joue aussi le rôle de joint de dilatation et évite l'apparition de fissures sur la pièce lors du refroidissement (en raison des différences de coefficients de dilatation du suscepteur 8 et de la structure 7 densifiée). La structure poreuse 7 peut avantageusement comporter à sa périphérie un feutre de 3 à 5 mm d'épaisseur afin d'obtenir une densification sur toute l'épaisseur de ladite structure.

On place les thermosondes 15 et 16 dans le suscepteur 8 et la structure 7, on ferme le couvercle 12, puis on effectue un balayage du réacteur 1 et de l'enceinte de confinement 6 à l'aide d'un gaz inerte, afin de chasser l'oxygène éventuellement présent. On remplit alors le réacteur 1 avec un précurseur, le cyclohexane par exemple.

Après avoir mis en fonctionnement le circuit réfrigérant du condenseur 3, l'installation de traitement des gaz 31 et les alimentations électriques, c'est-à-dire le générateur 14, le programmateur de température 17 et le régulateur de pression 30, on démarre la montée en température de la pièce. La pression est fixée à 1,2 bars par l'intermédiaire du régulateur de pression 32.

Dès que le précurseur entre en ébullition, on supprime le balayage de gaz inerte du réacteur 1. Le mélange liquide-vapeur est animé d'un mouvement ascendant au travers dudit réacteur 1. La vapeur ainsi que les aérosols formés vont dans le condenseur 3 et le dévésiculeur 4, tandis que le liquide issu du réacteur 1 et dudit condenseur 3 (vapeur recondensée) circule vers le bas du thermosiphon 2, puis retourne, à travers la canalisation 23, dans le bas dudit réacteur 1. La vanne 28 permet de moduler les vitesses de circulation, qui sont mesurées par le débitmètre 29.

Lorsqu'on atteint la température de craquage (environ 1000°C pour le cyclohexane), une partie des vapeurs du précurseur formées se décomposent dans la structure poreuse 7, ce qui conduit au dépôt de carbone à l'intérieur des pores du substrat et à la formation de gaz de craquage. Plus précisément, le craquage se réalise au niveau des parois les plus chaudes de la structure poreuse 7. Lorsque ladite structure poreuse 7 est montée sur un suscepteur 8 (cas représenté), le front de densification se propage de l'intérieur de la structure poreuse vers la paroi extérieure. (Lorsqu'il n'y a pas de suscepteur, le front de densification progresse depuis l'intérieur de la structure poreuse vers ses parois extérieures placées au contact du précurseur liquide.)

La vitesse d'avancée du front de densification peut varier de quelques dixièmes de mm/h au cm/h, en fonction de la température maximale de la pièce, de son architecture et de sa nature. La température est contrôlée par le programmateur 17 relié au thermocouple 15 placé dans le suscepteur 7 (ou au centre de la structure poreuse, lorsqu'il n'y a pas de suscepteur). La mesure, par le débitmètre 34, des débits de gaz de réaction et la connaissance de leur composition permettent de calculer la vitesse d'avancée du front de densification.

Le mélange vapeur non craquée, aérosols et gaz de craquage est évacué en partie haute du thermosiphon 2. Les aérosols et les vapeurs sont condensés au niveau de l'échangeur 3 et du dévésiculeur 4 et les gaz de réaction sont extraits en partie haute de l'installation et traités dans l'installation de traitement des gaz 31. Lorsque le niveau de précurseur atteint le niveau bas de la sonde 22, la pompe 20 injecte du précurseur jusqu'à ce que le niveau haut soit atteint.

Lorsque le front de densification est à environ 3 mm du bord externe de la structure poreuse (du bord externe du feutre, lorsqu'un feutre intervient), le débit chute de manière importante, même pour une augmentation de manière significative de la puissance (10 %). Cela est dû à ce que l'épaisseur dans laquelle a lieu le dépôt devient de plus en plus étroite, compte tenu d'une augmentation du gradient thermique (la distance entre le front de température maximale et la zone où l'on est à la température d'ébullition se réduit). On diminue alors progressivement la température jusqu'à la température ambiante.

Le réacteur 1 et le thermosiphon 2 sont alors vidés par l'intermédiaire de la ligne 23 en ouvrant la ligne 24 et en mettant en fonctionnement la pompe 25.

La pièce obtenue est récupérée et subit un traitement thermique de 500°C environ à l'étuve sous vide afin de retirer le précurseur résiduel imprégnant les porosités restantes. Le suscepteur 8 est séparé de l'ensemble et la partie extérieure de la pièce non densifiée (structure ou feutre ajouté, s'il y en avait un) est usinée.

Selon une variante avantageuse, on vidange le précurseur alors que la pièce traitée est encore chaude; ce qui permet de mettre en oeuvre son séchage sans manipulation de celle-ci. Le traitement thermique destiné à la débarrasser du précurseur résiduel imprégnant ses porosités restantes, peut alors être mis en oeuvre soit au sein du réacteur, soit comme indiqué plus haut dans une étuve.

Les substrats densifiés obtenus sont homogènes, de densité supérieure ou égale à 1,7 et possèdent, après caractérisation par microscopie optique en lumière polarisée, une structure laminaire rugueuse. La pièce peut être graphitée par traitement thermique à haute température (2400°C par exemple).

L'installation peut être rincée à partir de la pompe 20 en employant un solvant contenu dans la cuve 41. Le filtre 27 est démonté et nettoyé.

On illustre maintenant l'invention par l'exemple ci-après.

Le dispositif utilisé est du type de celui schématisé sur la figure 1 (de façon caractéristique, il inclut un thermosiphon).

Le réacteur a pour dimensions un diamètre intérieur de 200 mm et une hauteur de 600 mm. L'inducteur possède une hauteur de 400 mm et est constitué de 15 spires de diamètres intérieur et extérieur ayant respectivement pour valeurs 230 et 250 mm.

Le thermosiphon est constitué d'une enceinte de séparation liquide-vapeur de 25 cm de diamètre et de 50 cm de hauteur. Celle-ci est reliée au réacteur, en partie basse, par une canalisation de 4 cm de diamètre sur une longueur de 130 cm, et, en partie haute, par une tubulure de 20 cm de diamètre sur 40 cm de long.

La pièce intervenante est constituée de :
- la structure à densifier, qui est un tube en renfort à base de fibres de carbone, de dimensions Φint = 90 mm, Φₑₓₜ = 150 mm, H = 400 mm ;
- un suscepteur en carbone de dimensions Φ = 86 mm, H = 396 mm, recouvert sur l'ensemble de sa surface de deux couches de papier graphite de 1 mm d'épaisseur ;
- un feutre de 3 mm d'épaisseur placé à la périphérie de la structure à densifier ainsi qu'en partie haute et basse de la pièce.

Deux pièces de support et de centrage en alumine sont emboîtées en partie haute et basse du suscepteur.

Un thermocouple est fixé dans le suscepteur, un autre entre la structure fibreuse à densifier et le feutre.

La pièce est placée dans le réacteur et celui-ci est refermé. Le précurseur employé est le cyclohexane (C₆H₁₂). La pression est fixée à 1,2 bar. La montée en température s'effectue à une vitesse de 500°C/h jusqu'à 1200°C. La vitesse d'avancée du front de densification, déterminée par la mesure du débit des gaz de craquage et la connaissance de leur composition, est alors de 4 mm/h. Elle est gardée constante en ajustant la puissance du générateur au cours du temps. Le débit de liquide dans le thermosiphon est d'environ 100 l/min. Après environ 8 h de de densification, la température du thermocouple extérieur atteint 1150°C et le débit chute de manière importante. On procède alors à la descente en température à une vitesse de 800°C/h.

La pièce obtenue, après usinage des 3 mm extérieurs, possède une densité moyenne de 1,75, avec des écarts extrêmes, déterminés par tomodensimétrie, inférieurs à 5 %. Le rendement calculé en carbone, masse de carbone déposé sur masse de carbone du cyclohexane consommé, est de 20 %. Le carbone obtenu est de structure du type laminaire rugueux et est graphitable.

Par comparaison avec une densification sans thermosiphon, où la température est limitée à 1100°C (afin d'obtenir une densité et une homogénéité similaires à celles indiquées plus haut), le thermosiphon permet :
- une durée de densification de 8 h au lieu de 24 h,
- un rendement en carbone de 20 % au lieu de 10 %,
- un gain d'énergie consommée (pour masse identique de C déposé) d'environ 30 %.

## Revendications

1. Procédé de densification d'une structure poreuse comprenant le maintien de ladite structure poreuse immergée dans un précurseur liquide et le chauffage de l'ensemble structure poreuse/précurseur liquide de sorte que le produit de décomposition solide dudit précurseur liquide se dépose en partie dans les pores de ladite structure poreuse, **caractérisé en ce que** ledit précurseur liquide circule verticalement à un débit élevé, selon un mouvement ascendant, par convection naturelle.

2. Procédé de densification selon la revendication 1, **caractérisé en ce que** ledit précurseur liquide circule dans un circuit bouclé.

3. Procédé de densification selon l'une des revendications 1 ou 2, **caractérisé en ce que** ledit chauffage de l'ensemble structure poreuse/précurseur liquide est un chauffage inductif, avantageusement mis en oeuvre avec un suscepteur (8) ou un chauffage résistif, avantageusement mis en oeuvre avec un résistor; ladite structure poreuse à densifier (7) étant maintenue au contact dudit suscepteur (8) ou au quasi contact dudit résistor, intervenant avantageusement.

4. Procédé de densification selon la revendication 3, **caractérisé en ce que** ledit chauffage est un chauffage inductif mis en oeuvre avec un suscepteur (8) ou un chauffage résistif mis en oeuvre avec un résister ; un joint de dilatation étant disposé entre ladite structure poreuse à densifier (7) et ledit suscepteur (8) ou ledit résistor.

5. Procédé de densification selon l'une quelconque des revendications 1 à 4, **caractérisé en ce qu'**une autre structure poreuse, d'une épaisseur au moins égale à 3 mm, telle un feutre, est maintenue au contact de la (des) surface(s) libre(s) de ladite structure poreuse (7) à densifier, de sorte que ladite structure (7) puisse être densifiée sur toute son épaisseur.

6. Procédé de densification selon l'une quelconque des revendications 1 à 5, **caractérisé en ce que** la température est pilotée en fonction du débit et de la composition des gaz de la réaction.

7. Procédé de densification selon l'une quelconque des revendications 1 à 6, **caractérisé en ce que** ledit précurseur liquide est un précurseur de carbone, choisi parmi :
- le cyclohexane,
- les composés aromatiques répondant à l'une ou l'autre des formules (I) et (II) ci-après : 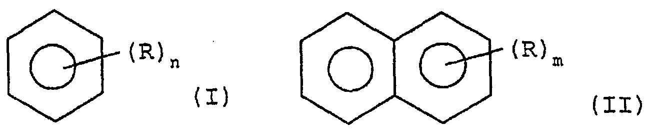 dans lesquelles :
n = 1,2, 3 ou 4,
m = 0,1 ,2 , 3 ou 4,
R représente, indépendamment, un halogène, de préférence le chlore, ou un groupement alkyle choisi parmi les groupes méthyle, éthyle, n-propyle ou i-propyle ;
et avantageusement le toluène ou le chlorobenzène;
- un mélange d'au moins deux composés aromatiques répondant à l'une et/ou l'autre desdites formules (I) et (II) ; et consiste avantageusement en le cyclohexane.

8. Dispositif utile à la mise en oeuvre du procédé selon l'une quelconque des revendications précédentes, comprenant :
- un réacteur (1) au sein duquel la structure poreuse (7) est immergée dans un précurseur liquide;
- des moyens pour assurer le chauffage de l'ensemble structure poreuse (7) / précurseur liquide ;
- des moyens de récupération, à l'état liquide, du précurseur vaporisé et/ou entraîné par les gaz de réaction;
**caractérisé en ce qu'**il comprend en outre des moyens formant thermosiphon pour assurer la circulation verticale, à un débit élevée, selon un mouvement ascendant, dudit précurseur liquide dans ledit réacteur (1).

9. Dispositif selon la revendication 8, **caractérisé en ce que** lesdits moyens de récupération du précurseur vaporisé et/ou entraîné, comprennent, selon la nature dudit précurseur, soit des moyens de refroidissement, soit une combinaison moyens de refroidissement/moyens de chauffage, lesdits moyens de chauffage étant alors disposés au-dessus desdits moyens de refroidissement.

10. Dispositif selon l'une des revendications 8 ou 9, **caractérisé en ce que** lesdits moyens pour assurer le chauffage comprennent une bobine d'induction (13) ; avantageusement placée dans le précurseur liquide et entourant la structure poreuse (7).

11. Dispositif selon l'une quelconque des revendications 8 à 10, **caractérisé en ce qu'**il comprend au contact de ladite structure poreuse (7) un suscepteur (8) ou au quasi contact de ladite structure poreuse (7) un résistor.

## Claims

1. A method for densifying a porous structure comprising maintaining said porous structure in a liquid precursor and heating the porous structure/liquid precursor assembly such that the solid decomposition product of said precursor liquid is partially deposited in the pores of said porous structure, **characterised in that** said liquid precursor circulates vertically at a high flow rate in an upward movement by natural convection.

2. The densification method according to claim 1 **characterised in that** said liquid precursor circulates in a closed circuit.

3. The densification method according to claim 1 or 2 **characterised in that** said heating of the porous structure/liquid precursor assembly is inductive heating, advantageously using a susceptor (8), or resistive heating, advantageously using a resistor ; said porous structure to be densified (7) being maintained in contact with said susceptor (8) or near-contact with said resistor, which susceptor (8) or resistor being advantageously used.

4. The densification method according to claim 3 **characterised in that** said heating is inductive heating using a susceptor (8) or resistive heating using a resistor, a dilatation joint being placed between said porous structure to be densified (7) and said susceptor (8) or said resistor.

5. The densification method according to any one of claims 1 to 4 **characterised in that** another porous structure, with a thickness equal to at least 3 mm, such as felt, is kept in contact with said free surface(s) of said porous structure (7) to be densified such that said structure (7) can be densified over its entire thickness.

6. The densification method according to any one of claims 1 to 5 **characterised in that** the temperature is controlled as a function of flow rate and composition of the reaction gas.

7. The densification method according to any one of claims 1 to 6 **characterised in that** said liquid precursor is a carbon precursor chosen from among:
- cyclohexane;
- aromatic compounds with one of the following formulae (I) to (II): 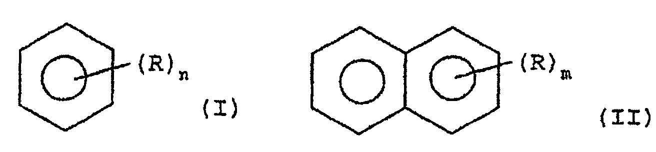 in which:
n = 1, 2, 3 or 4
m = 0, 1, 2, 3, or 4
R represents, independently, a halogen, preferably chlorine, or an alkyl group chosen from the methyl, ethyl, n-propyl or i-propyl group;
and represents advantageously toluene or chlorobenzene;
- a mixture of at least two aromatic compounds of one and/or other of said formulae (I) to (II);
and advantageously consists of cyclohexane.

8. A device useful for carrying out the method according to any one of the preceding claims, comprising:
- a reactor (1) in which the porous structure (7) is immersed in a precursor liquid;
- means to heat the porous structure (7) / liquid precursor assembly;
- means to recover the precursor, in the liquid state, precursor which is vaporised and/or stripped by the reaction gas,
**characterised in that** it further comprises means forming a thermosiphon to ensure vertical circulation at a high flow rate of said precursor liquid in an ascending movement in said reactor (1).

9. The device according to claim 8 **characterised in that** said means to recover the precursor which is vaporised and/or stripped by the reaction gas include, as a function of the type of precursor, either cooling means or a combination of cooling/heating means, in which case said heating means are positioned above said cooling means.

10. The device according to one of claims 8 or 9 **characterised in that** said means to heat include an induction loop (13), advantageously placed in the liquid precursor and surrounding the porous structure (7).

11. The device according to any one of claims 8 or 10 **characterised in that** it includes a susceptor (8) maintained in contact with said porous structure (7) or a resistor in near-contact with said porous structure (7).

## Patentansprüche

1. Verfahren zum Verdichten einer porösen Struktur, aufweisend das eingetaucht Halten der besagten porösen Struktur in einer Vorstufenflüssigkeit und das Erhitzen der Anordnung der porösen Struktur / der Vorstufenflüssigkeit derart, daß das feste Abbauprodukt der besagten Vorstufenflüssigkeit sich teilweise in den Poren der besagten porösen Struktur absetzt, **dadurch gekennzeichnet, daß** die besagte Vorstufenflüssigkeit mit einem hohen Durchsatz durch natürliche Konvektion in aufsteigender Bewegung vertikal zirkuliert.

2. Verfahren zum Verdichten nach Anspruch 1, **dadurch gekennzeichnet, daß** besagte Vorstufenflüssigkeit in einem geschlossen Kreislauf zirkuliert.

3. Verfahren zum Verdichten nach einem der Ansprüche 1 oder 2, **dadurch gekennzeichnet, daß** das besagte Erhitzen der Anordnung der porösen Struktur / der Vorstufenflüssigkeit ein Erhitzen durch Induktion ist, vorzugsweise durchgeführt mit einem Suszeptor (8), oder ein Widerstandserhitzen, vorzugsweise durchgeführt mit einem Widerstand, ist; und daß die besagte zu verdichtende poröse Struktur (7) in Kontakt mit besagtem Suszeptor (8) gehalten oder in Quasi-Kontakt mit besagtem, vorzugsweise vorhandenen, Widerstand gehalten ist.

4. Verfahren zum Verdichten nach Anspruch 3, **dadurch gekennzeichnet, daß** das besagte Erhitzen ein Erhitzen durch Induktion ist, das mit einem Suszeptor (8) durchgeführt wird, oder ein Widerstandserhitzen, das durch einen Widerstand durchgeführt wird; und daß eine Dehnungsverbindung zwischen der besagten zu verdichtenden porösen Struktur (7) und dem besagten Suszeptor (8) oder dem besagtem Widerstand vorgesehen ist.

5. Verfahren zum Verdichten nach einem der Ansprüche 1 bis 4, **dadurch gekennzeichnet, daß** eine andere poröse Struktur mit einer Dicke von mindestens 3 mm, wie ein Filz, in Kontakt mit der freien Oberfläche (den freien Oberflächen) der besagten porösen Struktur (7) gehalten wird, so daß die besagte Struktur (7) über ihre gesamte Dicke verdichtet werden kann.

6. Verfahren zum Verdichten nach einem der Ansprüche 1 bis 5, **dadurch gekennzeichnet, daß** die Temparatur gesteuert wird in Abhängigkeit von dem Durchsatz und der Zusammensetzung des Reaktionsgases.

7. Verfahren zum Verdichten nach einem der Ansprüche 1 bis 6, **dadurch gekennzeichnet, daß** die besagte Vorstufenflüssigkeit eine Kohlenstoffvorstufe ist, ausgewählt aus:
- Cyclohexan,
- aromatische Verbindungen entsprechend einer der beiden nachfolgenden Formeln (I) und (II): 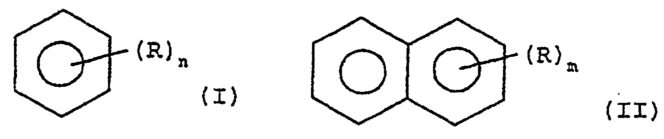 in welchen:
n= 1, 2, 3 oder 4
m= 0, 1, 2, 3 oder 4
R unabhängig ein Halogen, vorzugsweise Chlor, oder eine Alkylgruppe, gewählt aus der Methyl-, Ethyl-, n-Propyl oder i-Propylgruppe repräsentiert;
und vorzugsweise Toluol oder Chlorbenzol;
- eine Mischung von mindestens 2 aromatischen Verbindungen entsprechend einer der beiden besagten Formeln (I) und (II);
und vorzugsweise aus Cyclohexan besteht.

8. Vorrichtung, welche geeignet ist das Verfahren gemäß einem der vorangengenen Ansprüche durchzuführen, aufweisend:
- einen Reaktor (1), in welchem die poröse Struktur (7) in eine Vorstufenflüssigkeit eingetaucht ist;
- eine Einrichtung, um die Erhitzung der Anordnung der porösen Struktur (7) / der Vorstufenflüssigkeit sicherzustellen.
- eine Einrichtung zur Rückgewinnung des verdampften und/oder durch die Reaktionsgase verschleppten Vorstufenmaterials in der flüssigen Phase;
**dadurch gekennzeichnet, daß** sie außerdem aufweist eine Einrichtung zur Bildung eines Thermosyphons, um die vertikale Zirkulation mit einem hohen Durchsatz in aufsteigender Bewegung der besagten Vorstufenflüssigkeit in besagtem Reaktor (1) sicherzustellen.

9. Vorrichtung nach Anspruch 8, dadurch gekennzeichtnet, daß die besagte Einrichtung zur Rückgewinnung des verdampften und/oder durch die Reaktionsgase verschleppten Vorstufenmaterials in der flüssigen Phase entweder eine Einrichtung zum Abkühlen oder eine Kombination von Einrichtungen zum Abkühlen und Einrichtungen zum Erhitzen aufweist, wobei die besagte Einrichtung zum Erhitzen über der besagten Einrichtung zum Abkühlen ist,

10. Vorrichtung nach einer der Ansprüche 8 oder 9, dadurch gekennzeichtnet, daß die besagte Einrichtung zum Sicherstellen der Erhitzung eine Induktionsspule (13) aufweist; die vorzugsweise in der Vorstufenflüssigkeit und um die poröse Struktur (7) herum plaziert ist.

11. Vorrichtung nach einer der Ansprüche 8 bis 10, **dadurch gekennzeichnet, daß** sie einen Suszeptor im Kontakt mit der besagten porösen Struktur (7) oder einen Widerstand im Quasi-Kontakt mit der besagten porösen Struktur (7) aufweist.
